**Europäisches Patentamt**

**European Patent Office**

**Office européen des brevets**

(19)

(11) Numéro de publication: **0 128 409 B1**

---

## FASCICULE DE BREVET EUROPEEN

(12)

(45) Date de publication du fascicule du brevet:
**28.01.87**

(51) Int. Cl.⁴: **C 04 B 35/80,** C 04 B 35/00,
B 28 B 1/52

(21) Numéro de dépôt: **84105803.5**

(22) Date de dépôt: **22.05.84**

(54) **Procédé de fabrication d'une structure composite renforcée en matière céramique.**

(30) Priorité: **25.05.83 FR 8308573**

(43) Date de publication de la demande:
**19.12.84 Bulletin 84/51**

(45) Mention de la délivrance du brevet:
**28.01.87 Bulletin 87/5**

(84) Etats contractants désignés:
**BE CH DE FR GB IT LI NL SE**

(56) Documents cités:
**EP - A - 0 032 097**
**FR - A - 1 184 641**
**FR - A - 2 084 703**
**FR - A - 2 299 951**
**FR - A - 2 488 880**
**US - A - 3 819 439**
**US - A - 4 017 347**
**US - A - 4 366 202**

(73) Titulaire: **CERAMIQUES ET COMPOSITES, Les Miroirs - La Défense 3, F-92400 Courbevoie (FR)**

(72) Inventeur: **Minjolle, Louis, 10, rue Jeanne d'Albret, F-65000 Tarbes (FR)**
Inventeur: **Drouet, Claudette, 27, rue des Palombes, F-65290 Juillan (FR)**
Inventeur: **Hordonneau, Alain, 67, Villepreux Village, F-33160 Saint-Aubin de Médoc (FR)**
Inventeur: **Capdepuy, Bernard, F-33160 Saint-Médard en Jalles (FR)**

(74) Mandataire: **Eggert, Hans-Gunther, Dr., Räderscheidtstrasse 1, D-5000 Köln 41 (DE)**

ACTORUM AG

## Description

La présente invention concerne un procédé de fabrication d'une structure composite de matière céramique renforcée de fibres réfractaires, dans lequel on prépare une barbotine comprenant une résine synthétique possédant de bonnes propriétés de mouillage de la matière céramique et des fibres, on fait pénétrer les fibres dans la barbotine, on élimine la phase liquide de la barbotine par séchage, on élimine la résine synthétique de la structure formée par une cuisson, et soumet la matière céramique chargée des fibres à un frittage.

On a déjà proposé dans le brevet FR-A-2 084 703 ou le brevet GB-A-1 335 842 correspondant la fabrication de feuilles de nitrure de silicium renforcées par des fibres, par mélange de poudre de silicium dans une dispersion de latex acrylique, addition de fibres de nitrure de silicium ou d'un aluminosilicate, séchage et formation d'une poudre que l'on comprime en une bande, puis cuisson et frittage nitrurant de cette dernière.

Un tel procédé ne permet pas un bon mouillage des fibres, ce qui réduit la cohésion de la structure finale. Il procure des structures difficilement collables sur elles-mêmes et nécessite la vaporisation de quantités importantes d'eau. Il est relativement long et coûteux en énergie.

La présente invention a pour but de procurer un procédé de fabrication d'une structure composite en matière céramique renforcée par des fibres, présentant une grande cohésion, procédé qui soit simple, rapide et peu coûteux en énergie, et qui permette d'obtenir des pièces composites de forme pouvant être complexe, sans soumettre les fibres à des sollicitations mécaniques importantes lors de la fabrication de la structure initiale.

Le procédé de l'invention est caractérisé en ce que l'on incorpore dans la barbotine un solvant de la résine synthétique, et en ce que l'on introduit dans la barbotine des fibres assemblées en une nappe ou une mèche, avant d'effectuer le séchage.

Il répond en outre de préférence à au moins l'une des caractéristiques suivantes:

— On incorpore également dans la barbotine un plastifiant de la résine synthétique.

— En vue de la fabrication d'une feuille composite, on étale la barbotine sur un tapis roulant, et on introduit les fibres dans la barbotine étalée sur celui-ci, avant d'effectuer le séchage.

— On projette des fibres relativement courtes dans la barbotine à son arrivée sur le tapis roulant.

— On dévide et immerge dans la barbotine des fibres longues côte à côte à l'arrivée de celle-ci sur le tapis roulant.

— On dévide et immerge dans la barbotine un tissu ou une feuille de fibres non tissées agglomérées formés avec les fibres réfractaires.

— Après séchage on empile la feuille formée avec d'autres feuilles identiques et les solidarise par chauffage modéré, de préférence à une température inférieure à 200°C, avant d'effectuer le frittage.

— Après séchage on soumet la feuille formée à une élimination partielle de la résine synthétique par traitement thermique, on l'imprègne d'un solvant ou d'un plastifiant, puis l'empile avec d'autres feuilles identiques identiquement traitées et les solidarise par chauffage modéré (au-dessous de 200°C), avant d'effectuer le frittage.

— Apres séchage on soumet la feuille formée à une élimination partielle ou complète de la résine synthétique par traitement thermique, on l'imprègne d'un composé liquide de la matière céramique, puis l'empile avec d'autres feuilles analogues identiquement traitées et les solidarise par chauffage, avant d'effectuer le frittage.

— En vue de la préparation d'un câble composite, on trempe dans une barbotine de la matière céramique une mèche de fibres réfractaires, et on fait passer la mèche imprégnée de barbotine dans un ajutage de calibrage, avant d'effectuer le séchage.

— En vue de la fabrication d'une pièce en forme à partir du câble composite, on bobine le câble séché en une pièce de forme déterminée, on solidarise les spires de la pièce par thermocollage, avant d'en éliminer le liant par cuisson, puis de la fritter.

Pour que le procédé ci-dessus défini procure des pièces présentant de bonnes propriétés mécaniques, il convient que les transformations de structure de la matrice au cours du ou des traitements thermiques ne provoquent pas de retrait notable au frittage, qui risquerait d'endommager les fibres et d'abaisser les propriétés mécaniques de la structure composite. Il convient aussi que le ou les traitements thermiques de formation de la structure composite s'effectuent à une température inférieure à celle où la fibre commencerait à se dégrader.

Compte tenu de ces conditions, le procédé de l'invention s'applique à de nombreux matériaux de matrice, notamment

— au nitrure de silicium obtenu par nitruration de pièces façonnées à partir de silicium

— au nitrure de silicium obtenu à partir d'une poudre de ce matériau, consolidée et densifiée à l'aide de composés organiques de silicium

— au carbure de silicium densifié à l'aide de composés organiques du silicium

— à l'alumine

— au spinelle alumine-magnésie

— à la zircone

— à la magnésie

— à la mullite.

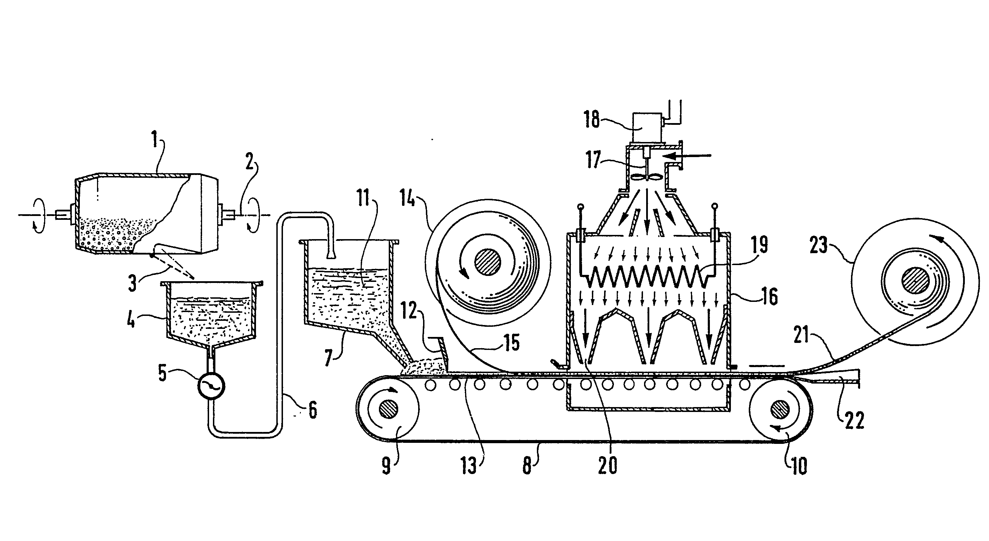

Il est décrit ci-après, à titre d'exemple et en référence à la figure unique du dessin annexé, des procédés de fabrication de feuilles composites selon l'invention.

*Exemple 1*

Pièces en alumine et fibres de carbure de silicium

On prépare un barbotine composée de

| | | |
|---|---|---|
| — Alumine de la société Alcoa (qualité A16) | 25 | kg |
| — Résine butyral polyvinylique de la marque «Butvar B 72A» de la Société Shawinigan Chemicals | 0,875 | kg |
| — Trichloréthylène | 12,5 | kg |
| — Dibutylphtalate | 4 | kg |

On introduit la barbotine dans un broyeur rotatif 1 de 50 litres avec 55 kg de billes d'alumine, tournant autour de l'axe horizontal 2. Après broyage pendant 24 heures, on déverse la barbotine broyée par la porte 3 dans le récipient 4, d'ou une pompe 5 la refoule par le conduit 6 vers le réservoir 7 d'alimentation d'un tapis roulant 8 en téréphtalate de polyéthylène-glycol, entraîné par les rouleaux 9 et 10.

La barbotine 11 se déverse à l'entrée du tapis roulant. Une racle 12 règle l'épaisseur de la couche de barbotine 13 sur le tapis.

En même temps, plusieurs bobines 14 de fil 15 de fibres de carbure de silicium de la qualité Nicalon, vendue par la société Mitsui, sont déroulées au-dessus de la barbotine. Les fils 15 s'immergent dans celle-ci.

La barbotine chargée des fils est alors entraînée par le tapis 8 dans le séchoir 16. Celui-ci comprend un ventilateur 17 entraîné par un moteur 18, qui refoule de l'air sec au contact de la résistance de chauffage 19. L'air sec et chaud, à 200°C par exemple, parvient par les embouchures 20 au contact de la barbotine et assure l'évaporation du trichloréthylène. A la sortie du séchoir, la feuille 21 formée se décolle de la surface du plateau, grâce à un couteau 22, et vient s'enrouler sur le tambour 23.

Les feuilles obtenues sont découpées en bandes de la longueur désirée, empilées et chauffées à 135° à 150°C. Il s'effectue un collage des différentes feuilles qui forment un empilage monolithique. On améliore les propriétés mécaniques des pièces obtenues en croisant les directions des fibres des feuilles superposées. On peut alors effectuer le frittage de l'alumine, par exemple par chauffage entre 1200° et 1800°C pendant 15 mn à 1 heure.

*Exemple 2*

Pièces en nitrure de silicium et fibres de carbure de silicium

On prépare une barbotine composée de

| | |
|---|---|
| — Poudre de silicium (fabriquée par la société Baudier) | 17,2 kg |
| — Polystyrène | 1,7 kg |
| — Paraffine | 0,4 kg |
| — Dioctylphtalate | 0,7 kg |
| — Cyclohexane | 18,8 litres |

On l'introduit dans un broyeur rotatif en porcelaine de 50 litres avec 40 kg de billes de porcellaine. Après broyage pendant 24 heures, on fait arriver la barbotine, comme dans l'exemple précédent, sur un tapis roulant en téréphtalate de polyéthylène-glycol. On immerge dans la barbotine étendue sur le tapis des fils de carbure de silicium Nicalon.

Après séchage de la barbotine et formage d'une pièce à partir de bandes découpées sur la feuille formée à la sortie du tapis roulant, par empillage et collage, on procède à la nitruration du silicium, sous atmosphère d'azote, à 1150° à 1250°C. Il se produit en même temps un frittage sans retrait du nitrure de silicium formé, la prise de poids due à la nitruration compensant le retrait de frittage.

*Exemple 3*

Pièces en alumine et fibres d'alumine

On prépare une barbotine composée de

| | | |
|---|---|---|
| — Alumine Alcoa (qualité A16) | 17,6 | kg |
| — Polystyrène | 1,45 | kg |
| — Paraffine | 0,35 | kg |
| — Dioctylphtalate | 0,6 | kg |
| — Cyclohexane | 16,5 | litres |

On l'introduit dans un broyeur en alumine de 50 litres avec 55 kg de billes d'alumine, et effectue son broyage pendant 24 heures.

On opère comme précédemment, en immergeant dans la barbotine étendue sur un tapis roulant des fibres d'alumine de la qualité FP commercialisées par Dupont de Nemours, qu'on aligne dans le sens de déroulement du tapis. Après séchage, découpage de bandes, empilage et collage de celles-ci, on soument les pièces obtenues au frittage de l'alumine entre 1200° et 1800°C pendant 15 mn à 1 heure.

Le procédé ci-dessus défini permet de contrôler la qualité des collages des différentes bandes entre elles avant le traitement thermique de consolidation céramique (examen par ultra-sons ou par holographie). Il permet même de réparer les zones qui se révèleraient défectueuses, grâce à une nouvelle imprégnation par le plastifiant de la résine suivie d'un nouveau traitement thermique à basse température.

Bien que le procédé qui vient d'être décrit en référence aux exemples paraisse la forme de mise en oeuvre préférable de l'invention, on comprendra que diverses modifications peuvent lui être apportées sans sortir de son cadre général, certaines opérations pouvant être remplacées par d'autres qui joueraient le même rôle technique. En particulier, le broyage de la barbotine peut être effectué à sec, et non par voie humide. On peut immerger dans la barbotine, à la place des fils de fibres réfractaires, un tissu formé à partir de tels fils, ou bien des fibres élémentaires courtes de direction aléatoire. Le séchage de la couche de barbotine peut être effectué par d'autres moyens, notamment par rayonnement infra-rouge.

La préparation de câbles composites, et la fabrication de pièces en forme à partir de ces câbles, s'effectuent de manière analogue. On peut aussi utiliser les câbles composites formés comme éléments constitutifs d'une structure tridimensionnelle, en perçant en cru des feuilles composites telles que précédemment décrites, en les empilant, puis en mettant en place les câbles dans les canaux constitués par la superposition des trous. On peut alors solidariser l'ensemble des feuilles et des câbles par chauffage à 135° à 150°C, puis effectuer le frittage de la pièce définitive.

**Revendications**

1. Procédé de fabrication d'une structure composite de matière céramique renforcé de fibres réfractaires, dans lequel on prépare une barbotine (11) comprenant une résine synthétique possédant de bonnes propriétés de mouillage de la matière céramique et des fibres, on fait pénétrer les fibres (15) dans la barbotine, on élimine la phase liquide de la barbotine par séchage (16), on élimine la résine synthétique de la structure formée par une cuisson, et soumet la matière céramique chargée des fibres à un frittage, caractérisé en ce que l'on incorpore dans la barbotine un solvant de la résine synthétique, et en ce que l'on introduit dans la barbotine les fibres assemblées en une nappe ou une mèche, avant d'effectuer le séchage.

2. Procédé selon la revendication 1, caractérisé en ce que l'on incorpore également dans la barbotine un plastifiant de la résine synthétique.

3. Procédé selon les revendications 1 ou 2, pour la préparation d'une feuille composite, caractérisé en ce que l'on étale la barbotine sur un tapis roulant (8), et en ce que l'on introduit les fibres dans la barbotine étalée sur celui-ci, avant d'effectuer le séchage.

4. Procédé selon la revendication 3, caractérisé en ce que l'on projette des fibres relativement courtes dans la barbotine à son arrivée sur le tapis roulant.

5. Procédé selon la revendication 3, caractérisé en ce que l'on dévide et immerge dans la barbotine des fibres longues côté à côté à l'arrivée de celle-ci sur le tapis roulant.

6. Procédé selon la revendication 3, caractérisé en ce que l'on dévide et immerge dans la barbotine un tissu ou une feuille de fibres non tissées agglomérées formés avec les réfractaires.

7. Procédé selon l'une des revendications 3 à 6, caractérisé en ce qu'après séchage on empile la feuille formée avec d'autres feuilles identiques et les solidarise par chauffage modéré, avant d'effectuer le frittage.

8. Procédé selon la revendication 7, caractérisé en ce que le chauffage modéré à lieu à une température inférieure à 200°C.

9. Procédé selon l'une des revendications 3 à 6, caractérisé en ce qu'après séchage on soumet la feuille formée à une élimination partielle de la résine synthétique par traitement thermique, en ce qu'on l'imprègne d'un solvant ou d'un plastifiant, puis l'empile avec d'autres feuilles identiques identiquement traitées et les solidarise par chauffage, avant d'effectuer le frittage.

10. Procédé selon l'une des revendications 3 à 6, caractérisé en ce qu'après séchage on soument le feuille formée à une élimination partielle ou complète de la résine synthétique par traitement thermique, en ce qu'on l'imprègne d'un composé liquide de la matière céramique, puis l'empule avec d'autres feuilles analogues identiquement traitées et les solidarise par chauffage, avant d'effectuer le frittage.

11. Procédé selon les revendications 1 ou 2, pour la préparation d'un câble composite, caractérisé en ce que l'on trempe dans une barbotine de la matière céramique une mèche de fibres réfractaires, et en ce que l'on fait passer la mèche imprégnée de barbotine dans un ajutage de calibrage, avant d'effectuer le séchage.

12. Procédé selon la revendication 11 pour la fabrication d'une pièce en forme, caractérisé en ce que l'on bobine le câble séché en une pièce de forme déterminée, et en ce que l'on solidarise les spires de la pièce par thermocollage, avant d'en éliminer le liant par cuisson, puis de la fritter.

**Patentansprüche**

1. Verfahren zur Herstellung einer Verbundkonstruktion aus mit hitzebeständigen Fasern verstärktem keramischem Material, bei dem man einen Schlicker (11) herstellt, der ein Kunstharz mit guten Benetzungseigenschaften für das keramische Material und die Fasern umfasst, die Fasern (15) in den Schlicker eindringen lässt, die flüssige Phase des Schlickers durch Trocknung (16) entfernt, das Kunstharz der gebildeten Struktur durch eine Härtung entfernt, und das faserbeladene keramische Material einer Sinterung unterwirft, dadurch gekennzeichnet, dass man in den Schlicker ein Lösungsmittel für das Kunstharz einsetzt, und dass man in den Schlicker die zu einem Vlies oder einem Vorgarn verbundenen Fasern einsetzt, bevor die Trocknung durchgeführt wird.

2. Verfahren nach Anspruch 1, dadurch gekennzeichnet, dass man in den Schlicker ebenfalls einen Weichmacher für das Kunstharz einbringt.

3. Verfahren nach Anspruch 1 oder 2 zur Herstellung einer Verbundbahn, dadurch gekennzeichnet, dass man den Schlicker auf einem Förderband (8) ausbreitet und dass man die Fasern in den auf diesem ausgebreiteten Schlicker einbringt, bevor man die Trocknung durchführt.

4. Verfahren nach Anspruch 3, dadurch gekennzeichnet, dass man relativ kurze Fasern in den Schlicker bei seiner Ankunft auf dem Förderband schleudert.

5. Verfahren nach Anspruch 3, dadurch gekennzeichnet, dass man lange Fasern abwickelt und nebeneinander in den Schlicker bei seiner Ankunft auf dem Förderband eintaucht.

6. Verfahren nach Anspruch 3, dadurch gekennzeichnet, dass man ein Gewebe oder ein Blatt von nicht gewobenen verbundenen, mit den hitzebeständigen Fasern gebildeten Fasern abwickelt und in den Schlicker eintaucht.

7. Verfahren nach einem der Ansprüche 3 bis 6, dadurch gekennzeichnet, dass man nach der Trocknung das gebildete Blatt mit anderen identischen Blättern stapelt und sie durch mässiges Erwärmen solidarisiert, bevor man die Sinterung durchführt.

8. Verfahren nach Anspruch 7, dadurch gekennzeichnet, dass die mässige Erwärmung bei einer Temperatur unter 200°C stattfindet.

9. Verfahren nach einem der Ansprüche 3 bis 6, dadurch gekennzeichnet, dass man nach der Trocknung das gebildete Blatt einer partiellen Entfernung des Kunstharzes durch thermische Behandlung unterwirft, dass man mit einem Lösungsmittel oder Weichmacher imprägniert und das Blatt dann mit anderen identischen Blättern, die identisch behandelt wurden, stapelt und durch Erwärmung solidarisiert, bevor man die Sinterung durchführt.

10. Verfahren nach einem der Ansprüche 3 bis 6, dadurch gekennzeichnet, dass man nach der Trocknung das gebildete Blatt einer partiellen oder vollständigen Entfernung des Kunstharzes durch thermische Behandlung unterwirft, dass man es mit einer flüssigen Verbindung des keramischen Materials imprägniert, und dann mit anderen analogen Blättern, die identisch behandelt wurden, stapelt und durch Erwärmung solidarisiert, bevor man die Sinterung durchführt.

11. Verfahren nach Anspruch 1 oder 2 zur Herstellung eines Verbundkabels, dadurch gekennzeichnet, dass man ein Vorgarn aus hitzebeständigen Fasern in einen Schlicker aus dem keramischen Material taucht, und dass man das mit Schlicker imprägnierte Vorgarn in ein Kalibrierrohr führt, bevor man die Trocknung durchführt.

12. Verfahren nach Anspruch 11 zur Herstellung eines Formstücks, dadurch gekennzeichnet, dass man das getrocknete Kabel zu einem Stück einer vorbestimmten Form wickelt, und dass man die Windungen des Stücks durch Thermokleben solidarisiert, bevor man das Bindemittel durch Härtung entfernt, und anschliessend sintert.

## Claims

1. A method of manufacturing a composite structure of ceramic material which is reinforced by refactory fibers, wherein a slip is prepared from a synthetic resin having good wetting properties on ceramic material and fibers, embedding fibers in the slip, eliminating the liquid phase from the slip by drying, eliminating the synthetic resin from the formed structure by heating, and sintering the fiber-impregnated ceramic material, characterized in that a synthetic resin solvent is incorporated in the slip, and in that the fibers are inserted in the slip in the form of an assembly which is a sheet or roving, before the drying.

2. A method according to claim 1, characterized in that a plasticizer for the synthetic resin is also incorporated in the slip.

3. A method according to claim 1 or 2, for preparing a composite sheet, characterized in that the slip is spread over an endless belt, and in that the fibers are inserted into the slip as spread on the belt and before drying.

4. A method according to claim 3, characterized in that relatively short fibers are projected into the slip on its arrival at the endless belt.

5. A method according to claim 3, characterized in that long fibers are unwound and immersed side-by-side in the slip on its arrival at the endless belt.

6. A method according to claim 3, characterized in that a woven or non-woven cloth of refractory fibers is unwound and immersed in the slip.

7. A method according to any one of claims 3 to 6, characterized in that after drying, the resulting sheet is stacked with other identical sheets and the stack is solidified by moderate heating prior to sintering.

8. A method according to claim 7, characterized in that the moderate heating takes place at a temperature of less than 200°C.

9. A method according to any one of claims 3 to 6, characterized in that after drying, the synthetic resin is partially eliminated from the formed sheet by heat treatment, in that the sheet is impregnated with a solvent or with a plasticizer and then stacked with other identical sheets that have been identically treated, and in that the sheets are solidified together by heating prior to sintering.

10. A method according to any one of claims 3 to 6, characterized in that after drying, the synthetic resin is completely or partially eliminated from the formed sheed by heat treatment, in that the sheet is impregnated with a liquid compound of the ceramic material and then stacked with other analogous sheets that have been identically treated, and in that the sheets are solidified together prior to sintering.

11. A method according to claim 1 or 2, for preparing a composite cable, characterized in that roving of refactory fibers is soacked in a refractory slip, and in that the slip impregnated roving is passed through a calibrating nozzle prior to drying.

12. A method according to claim 11 for manufacturing a shaped part, characterized in that the dried cable is wound into a part of predetermined shape, and in that the turns of the part are heat glued to one another prior to the binder being eliminated by heating and then sintering.